# EUROPEAN PATENT APPLICATION

(11) **EP 1 245 423 A2**
(43) Date of publication of application: **02.10.2002**
(21) Application number: 02425187.8
(22) Date of filing: 26.03.2002
(51) Int. Cl.: B60K 15/077

(54) **Fuel tank for vehicles**

(30) Priority: 30.03.2001 IT MI20010686
(71) Applicant: Vertemati Racing di Vertemati Guido s.a.s., 20050 Triuggio (MI) (IT)
(72) Inventor: Vertemati, Guido, 20050 Triuggio (Milano) (IT)
(74) Representative: Tansini, Elio Fabrizio

(57) **Abstract**

A fuel tank comprises a main holding body (2) containing a predetermined amount of fuel, a secondary holding body (3) hydraulically connected to the main holding body (2) and adapted to be hydraulically connected to the carburator, and transfer means (8) operatively active between the main (2) and secondary (3) holding bodies to move fuel from one body to the other; the secondary holding body (3) defines a compensation chamber (3a) designed, under operating conditions, to keep an operating level (3b) of the fuel at least as high as a positioning height of the feeding and mixing device.

## Description

The present invention relates to a tank, preferably a fuel tank, for vehicles provided with an internal combustion engine.

It is known that internal combustion engines, widely employed in a great number of technical fields, need a fuel-feeding system that must be such constructed as to meet precise operating requirements.

For instance, the fuel, stored in one or more tanks suitably distributed on the vehicle, must be brought to flow into the feeding and mixing members carrying out the required air-fuel mixing to enable normal operation of the engine.

Obviously, fuel inflow to these feeding and mixing members must be ensured in a very wide variety of static and dynamic situations of the vehicle, in order to avoid irregularities in the engine operation.

Maintenance of a steady fuel inflow is particularly required in the motorcycle field because two-wheeled vehicles are subjected to variations in the running position (on three axes in space) that often involve important variations in the angle of incidence or side inclination with respect to the plane along which the vehicles themselves run.

For better explaining the above, motorcycles intended for the so-called off-road use are to be considered: these vehicles, generally equipped with a single-cylinder engine fed from carburetors and characterized by important travels of the suspensions, are frequently employed for covering very steep stretches with a very uneven roadway and frequently are inclined on one side (at particular bends and/or obstacles) or even the ride may take place with one or both of the wheels not in contact with the ground.

It is clear that under these situations, which on the other hand are very variable and can take place one after the other in a very varying and/or sudden way, one essential condition for a permanent operation of the engine surely is given by the fact that, irrespective of the motorcycle's running position (that varies in continuous in a very marked manner), the carburetor must always have the availability in its float chamber of a fuel amount capable of enabling the correct determination of the amount of air/fuel mixture requested by the engine.

In order to meet the above described technical requirement, the known art throughout the technical development of motorcycles has worked out some particular construction typologies of tanks aiming at ensuring the fuel-flow continuity from the tank to the carburetor's float chamber.

Generally, to achieve this result the tank is positioned to such a height with respect to the carburetor that the tank is always located above the carburetor in a reasonably wide range of angles of the motorcycle. In this way, the feed continuity is given by the natural fall under gravity of the fuel passing from the tank to the underlying carburetor through appropriate pipes.

While this solution is particularly simple from a construction point of view, it however has some drawbacks.

First of all, to ensure an appropriate flexibility of use, for carrying out the relative positioning between tank and carburetor a minimum distance under which it is not possible to go must be taken into account because otherwise the fuel flow would not take place; as a result of this, the construction architecture of the motor vehicle is often limited as regards the maximum compactness of the motorcycle that can be obtained. In other words, due to the dimensional/geometric constraint that must always be ensured between fuel suction from the tank and fuel admission to the carburetor, manufacture of a vehicle in which the tank is placed at a greatly higher position than the carburetor becomes compulsory, which will bring about disadvantages in terms of weight distribution and height of the vehicle's centre of gravity and also from an ergonomic point of view.

In addition to this first known manufacture solution, a different technical solution has been put into practice which consists in interposing a delivery pump operating between the tank's fuel-sucking orifice and the carburetor itself. By so doing, some freedom in the tank placement has been reached since even if the latter due to particular manoeuvres of the vehicle takes such a position that the fuel surface is under the carburetor, engine operation is at all events ensured by the pump action.

This technique too however, has some drawbacks.

In fact, the presence of the delivery pump, while constituting an advantage and allowing more freedom in selecting the tank positioning, involves a greater overall vehicle complexity. Actually, if a pump is installed, an appropriate power supply is required for operation of same. It is therefore necessary to provide an electric system (or more generally a system for mechanical power transmission) enabling this pump to be operated and controlled; this results in an increase in the vehicle weight, and often also in a greater planning difficulty for conveniently disposing all the mentioned additional component members.

Furthermore, the delivery pump is often subjected to malfunctions resulting from arising of the so-called "vapour lock" phenomenon. This phenomenon essentially consists in that heat generated by the engine can vaporise the gasoline in the inflow pipes, thus creating a gas bubble; consequently, pumps of known type that typically ensure maintenance of a given volume flow rate, are brought to operate under such a condition that the fuel mass flow is drastically smaller. This involves important irregularities in operation, engine switching off, or even impossibility of carrying out a ready engine re-starting.

Still for the purpose of overcoming the mentioned drawbacks, a further technical solution has been developed that involves the presence of a main tank positioned with some freedom with respect to the carburetor and an auxiliary tank intercommunicating with the main tank.

In more detail, the auxiliary tank of much smaller capacity than the main tank, is disposed over the carburetor and is supplied with gasoline through a small delivery pump; obviously gasoline reaches the carburetor by fall from the auxiliary tank.

It is to be noted once more that this technical solution has some disadvantages: first of all, positioning of the auxiliary tank must take place at an almost fixed position with respect to the carburetor so that the planning flexibility is restricted and the general vehicle structure is made more complicated; in addition, a line of intercommunication between the two tanks is required for loading the auxiliary tank with fuel. This intercommunication line is rather extended (above all in the case in which the main tank is positioned far from the auxiliary tank or at a very low position with respect to the latter), and this leads to further planning complications (for instance, in terms of housing of the ducts and protection of same against concentrated heat flows from the engine and/or possible impacts with bodies from the outside) and to an increase in costs for vehicle assembling (since a greater number of components and operations are required for mounting).

Under this situation the technical task underlying the present invention is to devise a tank capable of substantially obviating the mentioned limits.

Firstly, within the scope of this technical task, it is an important aim of the invention to devise a tank capable of ensuring a continuity in a carburetor feeding within a very wide range of running positions of the vehicle; obviously, the present invention also aims at devising a tank ensuring the above described operating conditions to any typology of mixing/feeding devices of known type for an engine.

Another important aim of the invention is to devise a tank enabling planning and accomplishment of a vehicle, preferably a motorcycle, which is very compact and with an optimised weight distribution, in order to obtain an important improvement in the vehicle handling.

The present invention also aims at providing a tank which consists of a single container, so that the vehicle bulkiness is minimized and assembling is simplified.

A still further aim of the present invention is to provide a tank enabling a carburetor to be directly fed, i.e. without interposition of delivery pumps, so as to avoid too much power drawing and/or operating problems due to the vapour lock phenomenon.

The technical task mentioned and the aims specified are substantially achieved by a tank having the features set out in one or more of the appended claims.

Description of a preferred but not-exclusive embodiment of a tank in accordance with the invention is now given by way of non-limiting example with reference to the accompanying drawings, in which:
- Fig. 1 is a cross-sectional view of the tank in accordance with the present invention;
- Fig. 2 is a first alternative embodiment of the tank shown in Fig. 1;
- Fig. 3 is a second alternative embodiment of the tank shown in Fig. 1; and
- Fig. 4 shows a motorcycle provided with the tank in accordance with the present invention.

With reference to the drawings, a tank in accordance with the invention is generally identified by reference numeral 1.

It substantially comprises a main holding body 2, which is designed, under operating conditions, to contain a predetermined amount of fuel. As shown in the accompanying figures, also present is a secondary holding body 3 hydraulically connected to the main holding body 2.

In order to allow operation of the vehicle engine on which this tank can be installed, the secondary holding body 3 can be connected with at least one feeding and mixing member (that in a very common embodiment in the motorcycle field can be a carburetor 17 generally equipped with a float chamber for collection of the fuel to be mixed).

In accordance with the present invention, the secondary holding body 3 is at least partly contained within the main holding body 2; to make assembling of the vehicle easier and more convenient, this secondary holding body 3 is completely contained within the main holding body 2, so that bulkiness of the whole tank is reduced.

Advantageously, the secondary holding body 3 defines a compensation chamber 3a that, under operating conditions, is designed to keep an operating fuel level 3b at least as high as the positioning height of the feeding and mixing device (that as already said can be a carburetor 17, of the type known to those skilled in the art as a "vacuum-operated carburetor" for example, or at all events a carburetor of any other type, depending on current requirements).

It should be recognized at this point that the present invention, due to the expedient of keeping such an operating fuel level 3b, enables a correct engine operation in a very wide variety of running positions of the vehicle; in fact, due to maintenance of the operating fuel level 3b, the feeding and mixing device is always able to draw the necessary amount of fuel to be mixed (as a result of the suction work exerted by the engine's thermal unit), without resorting to the force of gravity (as, on the contrary, happens in traditional tanks, where it is the fuel weight itself that causes fuel flow to the carburetor) or to pumping actions induced by appropriate systems.

It should be also pointed out the fact that maintenance of the operating fuel level 3b (within the secondary holding body 3) also aims at eliminating the hydrostatic pressure difference that would set, should a different height exist between the carburetor and the level of the fuel to be sucked.

In fact, should fuel be to a lower level than the carburetor, the fuel itself would have to be provided with a given mechanical work corresponding to a potential-energy variation necessary to bring the fuel from the height where it is to the height of the carburetor mouth; practically, this mechanical work cannot be exclusively developed by exploiting the already mentioned suction effect generated by the thermal unit of the engine (especially if important height differences between the carburetor and the fuel level exist).

After the above statement, it is possible to see that the tank in accordance with the present invention enables exploitation of the suction action generated by the engine alone as sufficient to draw fuel to the carburetor itself, exactly due to the fact that fuel is placed to such a minimum level that it is not necessary to overcome the fuel weight.

Obviously, in accordance with the present invention, the operating level 3b of the fuel within the secondary holding body 3 is a minimum operating level that must be ensured with a substantial continuity in time. It is in any case possible to keep an operating fuel level which is higher than the carburetor's height, in order to increase reliability for example or to utilize the favourable effect, if particular requirements made it necessary, of the weight of the fuel mass placed above the carburetor (that in this case will flow to the carburetor being helped in its action by the force of gravity).

Conveniently, the secondary holding body 3 defines a compensation chamber 3a, which in turn has an inner compensation value at least as large as the volume of the carburetor's float chamber to which it is hydraulically connected. This volume is essentially due to the fact that, under conditions of maximum fuel flow rate required by the engine (that correspond to the situations in which the maximum power is required of the engine), the carburetor draws an important fuel amount, and at the same time tends to empty its float chamber.

The secondary holding body 3 must obviously be able to ensure a permanent operation even under these conditions, and must therefore be conveniently sized so as to enable the carburetor to suck in a fuel amount adapted to always ensure that the float chamber is loaded.

By virtue of the just described expedient, the present invention further guarantees a great ease in starting the engine, since the amount of fuel contained in the compensation chamber 3a is always as high as that required to fill the carburetor's float chamber, even when the engine has been switched off for a long period of time (and the fuel in the carburetor's float chamber has evaporated).

In this connection, it should be appreciated that the structural features of the present invention are particularly favourable in the case in which "manual" mechanisms are adopted for starting the engine, such as known kickstarters. In these cases, in fact, the mechanical action induced by the vehicle's user (which is substantially addressed to cause the first strokes of the engine piston or pistons to be carried out) is exploited for creation of the necessary fuel suction from the compensation chamber 3a, so that the carburetor's float chamber will be consequently filled, which will allow the necessary mixing for engine starting.

It is therefore clear that, in the absence of electric power, or even of electrically-powered systems (as it happens in racing motorcycles for example, where current is only generated when the engine is in motion and storage cells are practically absent), the present invention is able to ensure correct "loading" of the carburetor by exclusively utilising the mechanical power generated by the action of the vehicle user since the operating level 3b of the fuel contained in the compensation chamber 3a, which was maintained constant during the preceding engine-operation periods, is sufficient to fill the carburetor's float chamber, and above all is adapted to enable easy suction of fuel for the above mentioned reasons.

For accomplishing the mentioned maintenance of the operating level 3b, the tank in accordance with the present invention further comprises transfer means 8 operatively active between the main holding body 2 and the compensation chamber 3a to move fuel from the main holding body 2 to the secondary holding body 3.

In detail, this transfer means 8 comprises at least one pump 9 which is connected to a suction orifice 10 (formed in the main holding body 2) and to a delivery orifice 11 (formed in the compensation chamber 3a).

It should be recognized at this point that the structural nature of the transfer means 8 may also be different, provided a unidirectional transfer capable of always maintaining the operating level 3b of the fuel is ensured. For instance, pump 9 may be replaced with an appropriate series of union pipes and non-return valves, such sized and positioned that fuel passage from the main holding body to the secondary holding body is allowed, by shaking.

In other words, in accordance with the present invention it is possible to interpose at least one non-return valve, or a technically/operationally equivalent thereof, between the main holding body 2 and the secondary holding body 3 so as to allow fuel passage from the first to the second bodies and at the same time inhibit fuel reflows in the opposite way. Obviously, in this case, this valve can be conveniently sized so that fuel can flow in the desired direction by effect of the inertial forces generated by the vehicle speeding up and/or shaking operations.

Turning back to the case in which pump 9 is present, it is to be pointed out that the latter can be driven electrically and therefore can also operate on vehicles devoid of storage cells, provided electric current is generated during the engine running; in this case, as on the other hand already mentioned above, pump 9 will continuously load fuel into the compensation chamber 3a and the operating level 3b will be maintained also after switching the engine off.

Alternatively, pump 9 may be operated by a hydraulic and/or pneumatic circuit, picking up the necessary mechanical power from the engine or the "manual" starting device.

As can be viewed from the figures, tank 1 substantially has a box-shaped conformation that is essentially defined by the main holding body 2.

This main body 2 has a bottom wall 4, a given number of side walls 5 peripherally emerging from the bottom wall 4 and a top wall 6 connected to the side walls 5; depending on planning requirements, the conformation of these walls can be altered each time, based on the vehicle components with which tank 1 will be in contact (engine casing and/or gearbox, frame segments, body panels and others) and depending on the desired overall fuel capacity.

Advantageously, the suction orifice 10 is formed at the bottom wall 4, so that all fuel stored in the main holding body 2 can be utilized.

It should be also appreciated that the compensation chamber will be filled even when there is no more fuel in the main holding body 2; in this case, the secondary holding body 3 also serves as a fuel stock.

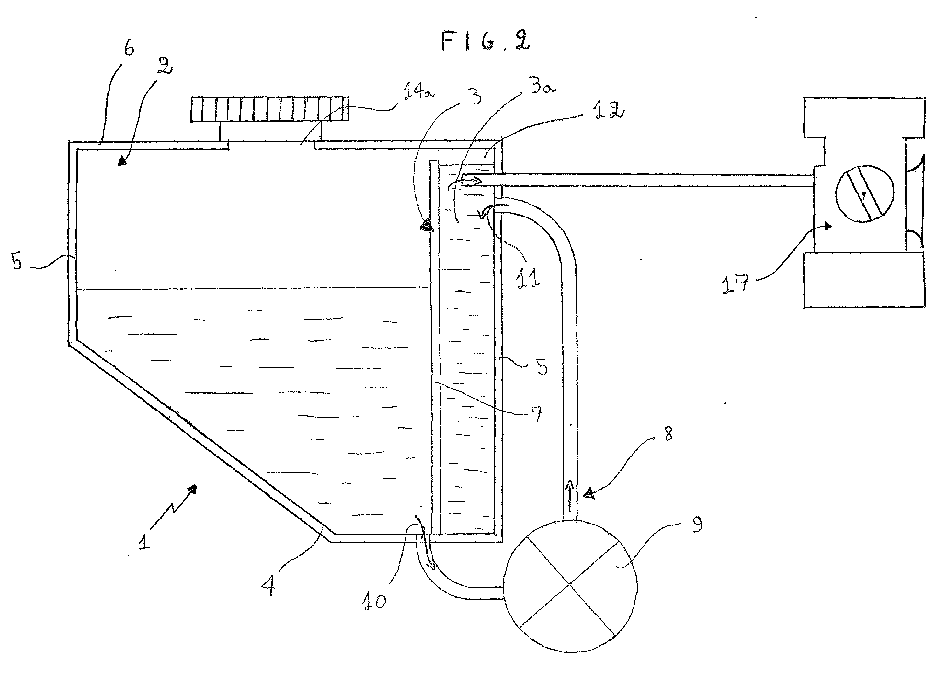

The conformation of the secondary holding body 3 can be of any nature, provided it is adapted to ensure an operating level 3b of fuel at least as high as the positioning height of the feeding and mixing device: for instance, the secondary holding body 3 may be defined by at least one separation element 7 (which substantially is a plate-like element) emerging from the bottom wall 4 and by predetermined cooperating portions of the side walls 5 of the main holding body 2 (in Fig. 2, the front side wall and two portions of the right and left side walls).

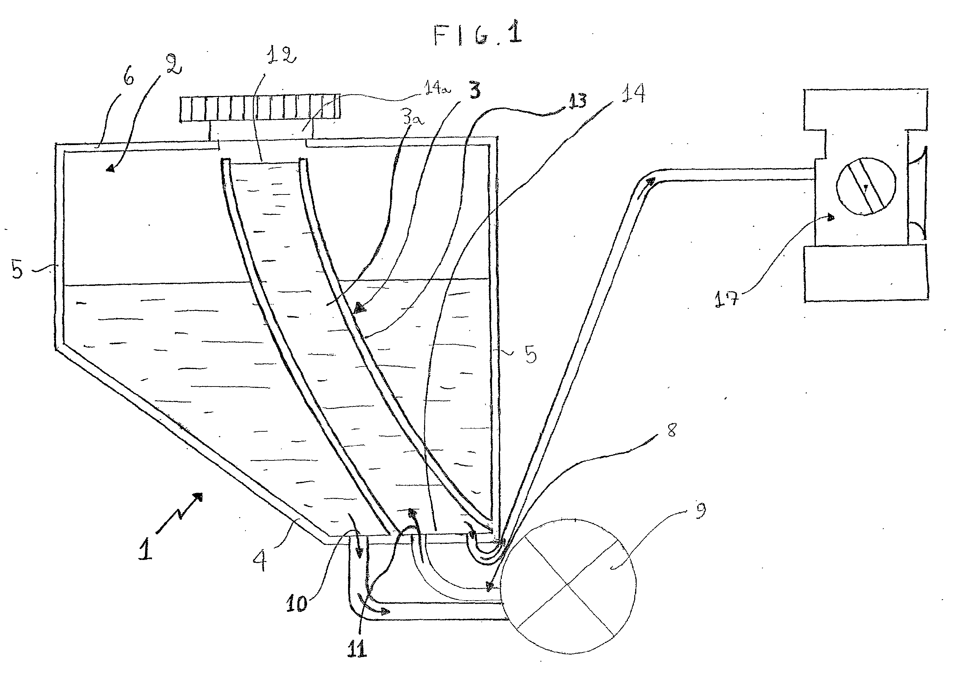

According to this construction architecture, the compensation chamber substantially has the shape of a prismatic body which has a vertical dimension at least as high as the operating level 3b (see Figs. 1, 2 and 3).

Still in Fig. 2 it is possible to see that this prismatic body has a free end 12 which is positioned internally of the main holding body 2.

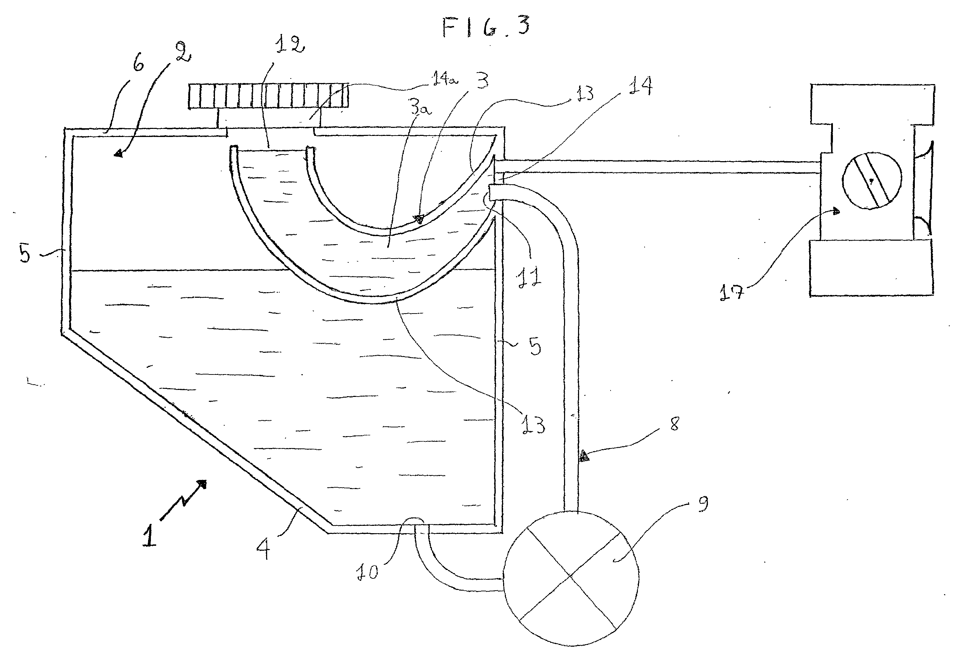

Still in accordance with the present invention, some interesting variations can be made in manufacturing the secondary holding body 3, which are shown in Figs. 1 and 3, for example. These variations involve the presence of a hollow body 13 which has a curved tubular shape.

This hollow body has a closed end 14 connected to a side wall 5 and a free end 12 (similar in structure and operation to the previously described free end 12), which is disposed opposite to the first end and internally of the main holding body 2.

Advantageously, in both the described alternative embodiments the free end 12 has an intercommunication opening; in this way the main holding body 2 is hydraulically connected to the secondary holding body 3 simultaneously by the transfer means 8 and this intercommunication opening; thus possible admission of fuel to the compensation chamber 3a is also allowed either by virtue of the tank filling or by shaking.

In accordance with the present invention, the main holding body 2 has a supply orifice 14a (usually positioned on the top wall 6); conveniently the intercommunication opening can be placed close to this supply orifice 14a, so that when the vehicle is supplied with fuel first of all the compensation chamber 3a is filled and subsequently fuel overflowing occurs so that it progressively fills the main holding body 2.

The present invention also relates to a vehicle, and more particularly a motorcycle, first of all comprising a support frame 15, an engine 16 (provided with at least one feeding and mixing device, that typically can be a carburetor) placed at a first height with respect to frame 15 and at least one tank 1 disposed at a second height with respect to frame 15 and hydraulically connected at least to the feeding and mixing device; obviously in this vehicle tank 1 will have the above described features, and above all the relative arrangement between tank 1 and the feeding and mixing device in the support frame 15 will be adapted to enable the operating level 3b of the fuel contained in the compensation chamber 3a to be as high as or higher than the positioning height of the feeding and mixing device 17.

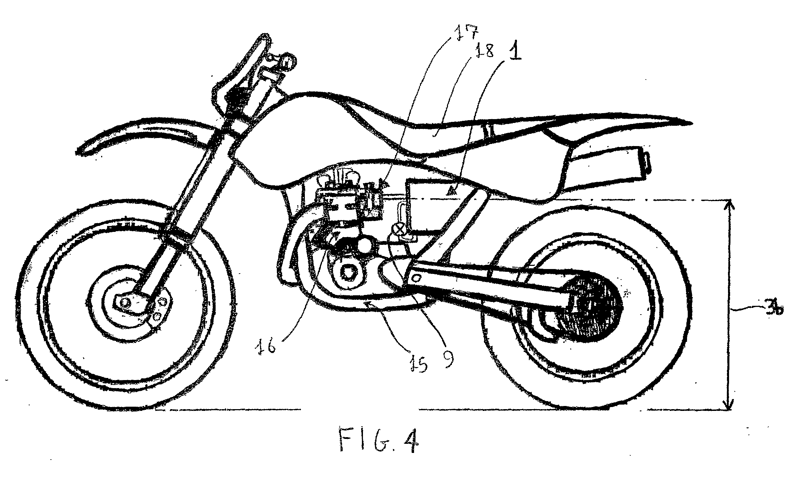

It should be also pointed out that such a device, due to the structural and operating features of tank 1 in accordance with the invention, can contemplate a particularly advantageous positioning of tank 1 so as to obtain an optimal weight distribution and a reduction in the centre of gravity height of the vehicle with respect to the ground. Actually, in Fig. 4 it is possible to see that this vehicle, obviously equipped with a saddle 18 for a rider (which will be positioned to a third height with respect to frame 15), has tank 1 placed in the vicinity of, and under saddle 18.

In this manner, the vehicle rider experiences to a very low degree the mass variations due to the progressive tank emptying and in addition the tank can be located also at particularly lowered positions, which is an advantage in terms of handiness around the rolling axis and from an ergonomic point of view.

The invention achieves important advantages.

In fact, first of all it will be recognized that due to the particular construction architecture of the present tank, a correct operation of the feeding and mixing devices connected thereto can be ensured, in particular when carburetors (of the "vacuum-operated" type or other types) are concerned.

In addition, the particular inner conformation of the inventive tank enables a wide freedom of choice in planning the tank itself; thus, the vehicle centre of gravity can be lowered and in addition the tank can be positioned in such a manner that the weight variation resulting from a progressive fuel consumption does not alter the weight distribution in the vehicle itself, which will bring about clear advantages in terms of easy ride and handiness.

Another important advantage correlated with the present invention resides in that the risks of vapour-lock phenomena are substantially zero, because the carburetors utilize the suction work generated by the pistons to draw the mixture in, whereas the pump operating between the different tank "sectors" must essentially deal with fuel at low temperature (that will hardly form pressurized vapour bubbles); obviously, this results in more reliability in operation and in a constant yield as the temperature increases.

Furthermore, since there is not a separated tank disposed above the carburetor, practically a single fuel-movement line exists that extends from the tank to the carburetors; this feature too is advantageous in terms of reliability, safety, easy manufacture and low production costs.

Finally it should be appreciated that in the tank of the invention, since a particularly simple structure is involved and particular materials and/or working operations are not required, the production costs are reduced and the manufacture processes are greatly simplified, the correct use conditions of the vehicle being at the same time ensured under any situation.

## Claims

1. A tank, preferably for fuel, more preferably for installation on vehicles having at least one internal-combustion engine and at least one feeding and mixing device operatively interlocked with said engine, comprising:
- a main holding body (2) designed, under operating conditions, to contain a predetermined amount of fuel;
- a secondary holding body (3) hydraulically connected to said main holding body (2) and adapted to be hydraulically connected with at least one feeding and mixing member;
**characterized in that** the secondary holding body (3) is at least partly contained within the main holding body (2).

2. A tank as claimed in claim 1, **characterized in that** the secondary holding body (3) is completely contained within the main holding body.

3. A tank as claimed in anyone of the preceding claims, **characterized in that** the secondary holding body (3) defines a compensation chamber (3a) designed, under operating conditions, to keep an operating level (3b) of the fuel at least as high as a positioning height of the feeding and mixing device, said feeding and mixing device preferably being a carburetor (17) having at least one float chamber for collection of the fluid to be mixed.

4. A tank as claimed in claim 3, **characterized in that** said compensation chamber (3a) has a compensation volume at least as large as the volume of the carburetor's float chamber hydraulically connected to the compensation chamber (3a).

5. A tank as claimed in anyone of the preceding claims, **characterized in that** it further comprises transfer means (8) operatively active between the main holding body (2) and the compensation chamber (3a) for fuel movement from the main holding body (2) to the secondary holding body (3).

6. A tank as claimed in claim 5, **characterized in that** said transfer means (8) comprises at least one pump (9) connected to a suction orifice (10) formed in the main holding body (2) and a delivery orifice (11) formed in the compensation chamber (3a).

7. A tank as claimed in claim 6, **characterized in that** the main holding body (2) is a box-shaped body having a bottom wall (4), a given number of side walls (5) peripherally emerging from said bottom wall (4) and a top wall (6) connected to said side walls (5), said suction orifice (10) being formed at said bottom wall (4).

8. A tank as claimed in anyone of the preceding claims, **characterized in that** the secondary holding body (3) is defined by at least one separation element (7) emerging from the bottom wall (4) and by predetermined cooperating portions of the side walls (5) of the main holding body (2), the compensation chamber (3a) substantially having the shape of a prismatic body with a vertical dimension at least as high as the operating level (3b), said prismatic body having a free end (12) positioned internally of the main holding body (2).

9. A tank as claimed in anyone of the preceding claims 1 to 7, **characterized in that** the secondary holding body (3) is defined by a hollow body (13), preferably having a curved tubular shape, said hollow body (13) having a closed end (14) connected to a side wall (5) and a free end (12), opposite to said closed end (14), positioned internally of the main holding body (2).

10. A tank as claimed in claims 8 and 9, **characterized in that** said free end (12) has an intercommunication opening, the main holding body (2) being hydraulically connected to the secondary holding body (3) by the transfer means (8) and/or through said intercommunication opening.

11. A tank as claimed in claim 10, **characterized in that** the main holding body (2) has a supply orifice (14a), the intercommunication opening being preferably placed close to said supply orifice (14a).

12. A vehicle, preferably a motorcycle, comprising:
- a support frame (15);
- an engine (16) provided with a least one feeding and mixing device (17) located at a first height with respect to said frame (15), said feeding and mixing device preferably being a carburetor (17); and
- at least one tank (1) located at a second height with respect to the frame (15) and hydraulically connected at least to the feeding and mixing device,
**characterized in that** said tank (1) is of the type as claimed in one or more of the preceding claims.

13. A vehicle as claimed in claim 12, **characterized in that** it further comprises a saddle (18) for a rider positioned at a third height with respect to the frame (15), and **in that** the tank (11) is placed in the vicinity of, and under said saddle (18).
